(19) Europäisches Patentamt
European Patent Office
Office européen des brevets

(11) Numéro de publication: **0 082 057**
**B1**

# (12) FASCICULE DE BREVET EUROPEEN

(45) Date de publication du fascicule du brevet: **30.04.86**

(21) Numéro de dépôt: **82402221.4**

(22) Date de dépôt: **06.12.82**

(51) Int. Cl.[4]: **C 07 F 9/36,** C 07 F 9/32 // C07F9/65

## (54) Procédé de préparation de phosphinamides, applications et nouveaux produits.

(30) Priorité: **11.12.81 FR 8123153**
**03.12.82 FR 8220264**

(43) Date de publication de la demande:
**22.06.83 Bulletin 83/25**

(45) Mention de la délivrance du brevet:
**30.04.86 Bulletin 86/18**

(84) Etats contractants désignés:
**BE CH DE GB IT LI NL SE**

(56) Documents cités:

**BULLETIN OF THE CHEMICAL SOCIETY OF JAPAN, vol. 40, no. 1, janvier 1967, pages 147-149, Tokyo JP; TAMOTSU FUJISAWA et al.: "The ring-opening polymerization of cyclic aminophosphinites"**

**Le dossier contient des informations techniques présentées postérieurement au dépôt de la demande et ne figurant pas dans le présent fascicule.**

(73) Titulaire: **SOCIETE NATIONALE ELF AQUITAINE**
**Tour Aquitaine**
**F-92400 Courbevoie (FR)**

(72) Inventeur: **Juge, Sylvain**
**2 Quartier Boieldieu**
**F-92800 Puteaux (FR)**

(74) Mandataire: **Kohn, Armand**
**5 Avenue Foch**
**F-92380 Garches (FR)**

(56) Documents cités:

**TETRAHEDRON LETTERS, vol. 22, 1981, pages 571-572, Pergamon Press Ltd., GB; TORU KOIZUMI et al.: "Grignard reaction of 2-phenyl-tetrahydropyrrolo-1,3,2-oxazaphospholes, observation of the stereospecific inversion of configuration"**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

EP 0 082 057 B1

**Revendications**

La présente invention concerne un nouveau procédé pour la production de phosphinamides; elle comprend, en tant que produits chimiques nouveaux, certains phosphinamides. L'invention s'applique à l'utilisation de phosphinamides, à la préparation de différents composés organiques de phosphore, parmi lesquels des phosphinates ont une importance particulière. Un avantage marqué de l'invention réside en ce qu'elle rend possible l'obtention de différents composés optiquement actifs avec des bons rendements et une haute pureté optique.

L'utilité de composé organiques phosphorés, et en particulier de tels composés optiquement actifs, est bien connue à l'heure actuelle. On sait, en effet, que de nombreux produits naturels et synthétiques peuvent être préparés, à présent, par synthèse asymétrique, catalysée au moyen de métaux de transition, et notamment avec des catalyseurs comprenant des ligands organo-phosphorés, optiquement actifs. On prépare ainsi des substances intéressant l'agriculture, l'alimentation, la pharmacie ou la parfumerie. La production de L—DOPA, si utile de thérapeutique, en particulier pour le traitement de la maladie de Parkinson, en est un example. Le développement et l'étude de ces synthèses sont actuellement limités par la difficulté de préparer les ligands organophosphorés, optiquement actifs, très souvent employés dans les catalyseurs asymétriques.

La présente invention apporte un perfectionnement à cette technique, en rendant possible la synthèse plus facile et plus économique de toute une série de composés organophosphorés, notamment de phosphinamides et, à partir d'elles, des phosphinates, des oxydes de phosphines, des phosphines, des phosphoniums, des phosphinimides, etc.

C'est à partir de phosphinates qu'il est aisé d'obtenir les différents produits sus-indiqués. Il est donc important de pouvoir produire les phosphinates d'une façon plus économique que par le passé. Or, les méthodes de l'art antérieur sont assez laborieuses; ainsi, celle de Mislow, De Bruin et Coll. (Journ. Am. Chem. Soc. 91,7393, 1969 et J. Org. Chem. 37,2272-1972) opère par l'intermédiaire du phosphinate de menthyle, à partir d'une dichlorophosphine, avec dédoublement du phosphinate, l'ensemble du procédé comportant 7 étapes. Une autre voie de synthèse de phosphinates optiquement actifs utilise, comme matière de départ, l'oxazaphosphole-1,3,2 (Tetrahedron Let. 571, 1980); elle nécessite également un dédoublement de l'oxazaphosphole et l'emploi de réactifs organo-métalliques, l'ensemble des opérations comportant 4 étapes.

D'une façon générale, les procédés, utilisés jusqu'à présent, conduisent à un faible rendement final en phosphinates, ils sont longs, nécessitent un dédoublement plus ou moins difficile de l'intermédiaire et exigent l'emploi d'un produit intermédiaire clé, accessible industriellement, qui possède deux des substituants du phosphinate voulu; dans des procédés, on est d'ailleurs limité quant au choix du 3ème substituant de phosphinate.

Le nouveau procédé suivant l'invention, qui utilise un phosphinamide, par une réaction en une seule étape, permet d'accéder à tout phosphinate voulu, par une alcoolyse réalisable facilement et dans des conditions économiques. La préparation des phosphinamides, suivant l'invention, peut être réalisée très rapidement, notamment en 15 minutes, avec des rendements acceptables industriellement; on peut aussi le conduire plus lentement et obtenir des rendements plus élevés. Il suffit généralement d'environ 1 heure pour passer de l'amide au phosphinate correspondant. Les intermédiaires du procédé ont une bonne stabilité chimique; on n'a pas besoin de réactifs, ni de réactions compliquées, ni de conditions opératoires sévères. Un autre avantage considérable, pour les synthèses de produits optiquement actifs, est l'induction asymétrique très élevée.

Le procédé, suivant l'invention, consiste à préparer un phosphinamide par l'action d'un halogénure organique $R^2X$ où X est chlore, brome ou iode, $R^2$ étant un alkyle, aryl-alkyle, aryl cycloalkyle ou une chaîne saturée portant des groupes fonctionnels, notamment ester, éther ou cétone sur une oxaza-1,3,2-phospholidine et il est caractérisé en ce que l'ou opère à l'abri de l'air et en l'absence de l'humidité. Cette réaction peut être représentée comme suit.

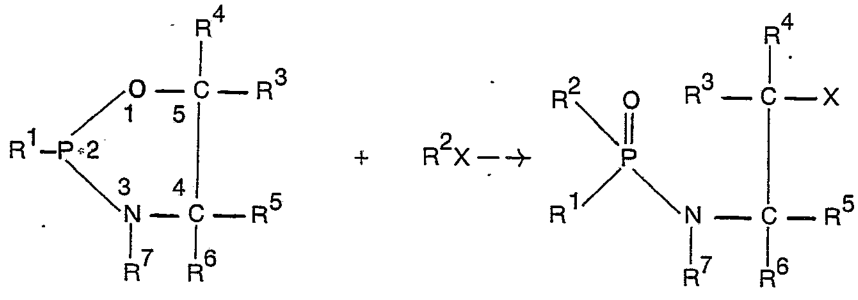

(1)

(A) (B) (C)

Dans les formules ci-dessus, les symboles $R^1$ et $R^3$ à $R^7$ désignent des groupements hydrocarbonés ou des atomes d'hydrogène. Ces groupements, semblables ou différents, peuvent être notamment aliphatiques, cycloaliphatiques ou/et aryliques. De préférence, lorsque $R^3$ ou/et $R^6$ sont des radicaux hydrocarbonés, $R^4$ et $R^5$ représentent des atomes d'hydrogène. Parmi les substituants $R^1$ et $R^3$ à $R^7$, les plus courants sont des alkyles en $C_1$ à $C_4$, le phényle et le benzyle; on peut cependant avoir des alkyles par exemple en $C_1$ à $C_{18}$, des cyclopentyles, cyclohexyles, phényles substitués par des alkyles, des naphtyles, etc.

Selon un mode opératoire, l'oxazaphospholidine A est prise à l'état solide et chauffée avec un halogénure d'alkyle, de cycloalkyle ou d'aryle, B, liquide; le phosphinamide C formé est cristallisé dans un solvant approprié, ou séparé sous une forme huileuse.

Cette nouvelle réaction qui fournit le phosphinamide avec un rendement convenable, est d'autant plus surprenante qu'elle n'a pas pu être réalisée dans le passé pour donner un tel résultat. En effet, les auteurs qui ont essayé de l'appliquer en travaillant en solution dans du toluène ou dans un autre solvant, ont pu l'utiliser seulement pour des polymères, ou bien ont obtenu des produits mal définis, non identifiables [Arbuzov et col. (Akad. Nauk. SSSP Otd Kim. Nauk. 789, 1952) ou Mukaiyama et col. (Bull. Chem. Soc. Jap. 40, 147, 1967)]. Par contre de bons résultats sont obtenus, suivant l'invention, grâce à l'absence de l'humidité, de l'air et de préférence aussi de la lumière, dans la zone de réaction d'une oxazaphospholidine avec un halogénure organique.

La réaction permet une préparation plus ou moins rapide, si la température est portée à une valeur d'environ 40° à 100°C. En opérant à plus basses températures, notamment entre 10° et 40°C, et en particulier à l'ambiante, surtout entre 15° et 30°C, on a une réaction plus lente, mais des rendements et puretés supérieurs.

Suivant un premier mode d'exécution de l'invention, l'oxazaphospholidine solide (A) est portée à la température voulue, sous une atmosphère de gaz inerte, dans l'obscurité, en l'absence de l'humidité, on lui ajoute l'halogénure organique B, voulue, $R^2X$, et l'on continue à chauffer pendant le temps nécessaire. On peut ainsi avoir des rendements de l'ordre de 60% en phosphinamide, ce qui est très bon en comparaison avec les méthodes connues.

Selon une autre forme d'exécution de l'invention, l'oxazaphospholidine et l'halogénure organique sont dissous dans un solvant approprié, et la solution est maintenue à la température voulue, sous atmosphère inerte, à l'abri de l'humidité, dans l'obscurité, jusqu'à la formation d'un maximum de phosphinamide.

Conviennent les différents solvants usuels, tels qu'hydrocarbures aromatiques, aliphatiques, cycloaliphatiques ou autres. Particulièrement utiles sont des mélanges d'hydrocarbures benzéniques avec des cyclanes.

La matière départ, l'oxazaphospholidine A est une substance facile à obtenir avec des bons rendements, par des procédés connus dans l'art, notamment par l'action d'une diamino-phosphine sur un amino-alcool. Par exemple, par la méthode décrite par Ternaki Mukaiyama et Yasuto Kodaira (Bull. Chem. Soc. Japan 39, (6), 1287—301 (1966), on obtient des oxazaphospholidines-1,3,2 par l'action de la diaminophosphine sur un amino-alcool, qui, dans le cas présent, peut être l'éphédrine. La réaction peut être schématisée de la façon suivante.

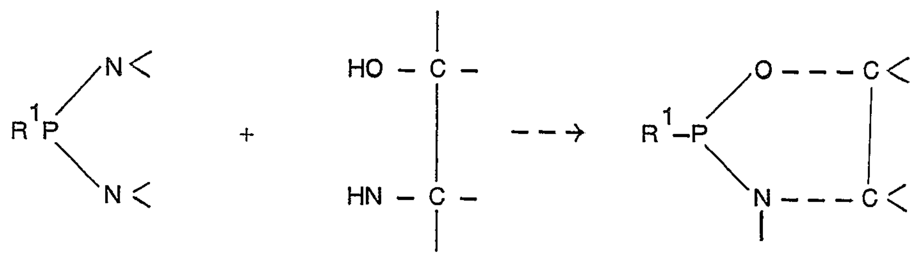

(A)

(2)

Un diastéréoisomère de cette oxazaphospholidine peut être donné par la réaction sus-indiquée, si l'on part d'un aminoalcool optiquement actif. Un avantage imprévu de l'invention résidue en ce que, à partir d'une telle oxazaphospholidine, par l'action de l'halogénure (B), on obtient un phosphinamide (C) avec une très bonne conservation de la pureté diastéréoisométrique. Ainsi, en partant de (−) éphédrine, en tant qu-amino-alcool, on assiste à la formation pratiquement d'un seul des diastéréoisomères possibles de l'oxazaphospholidine; la configuration absolue, par rapport à l'atome de phosphore, est alors fixée.

En ce qui concerne les transformations possibles des phosphinamides obtenus par le procédé de l'invention, la plus importante est l'alcoolyse qui permet de passer aisément aus phosphinates correspondants, suivant la réaction

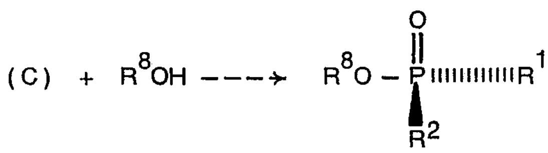

(D) (E)

(3)

On voit que le procédé de l'invention permet de choisir, à volonté, les radicaux $R^1$, $R^2$ et $R^8$ pour le phosphinate E voulu. En effet, $R^1$ provient de l'oxazaphospholidine A de départ, $R^2$ est donné par l'halogénure B, tandis que $R^8$ dépend du choix de l'alcool ou de phénol employé pour 1'alcoolyse dans la réaction (3). Un mode particulier, suivant l'invention, d'alcoolyse consiste à catalyseur celle-ci par une résine échangeuse d'ions; cela apporte l'avantage de la facilité de séparation de catalyseur, par simple filtration, après la réaction.

L'avantage, signalé plus haut, de pouvoir préparer le phosphinamide C à partir d'une oxazaphospholidine A optiquement active, se répercute sur l'obtention des phosphinates suivant la réaction (3). En effet, on peut, dans le cadre de l'invention, obtenir les phosphinates correspondant aux deux antipodes de configuration absolue, connue, notamment:

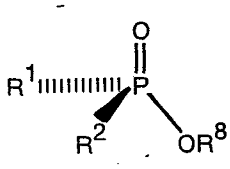

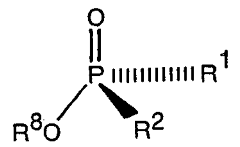 .

(4)

Conformément aux conventions, d'après la notation ci-dessus, $R^2$ se trouve au-dessus de la page et $R^1$ au-dessous, tandis que O et $OR^8$ sont dans le plan de celle-ci. Les antipodes de configuration absolue R ou S déterminée du phosphinate E peuvent être obtenus respectivement par l'emploi de l'alcool aminé (+) ou (−) dans la réaction (2) conduisant à l'oxazaphospholidine. Ce résultat peut être obtenu également par l'introduction des groupements $R^1$ et $R^2$ dans un ordre différent. Le tableau suivant de formules illustre ces possibilités.

(Voir tableau à la page suivante).

Oxazaphospholidine à partir de la (−) éphédrine :

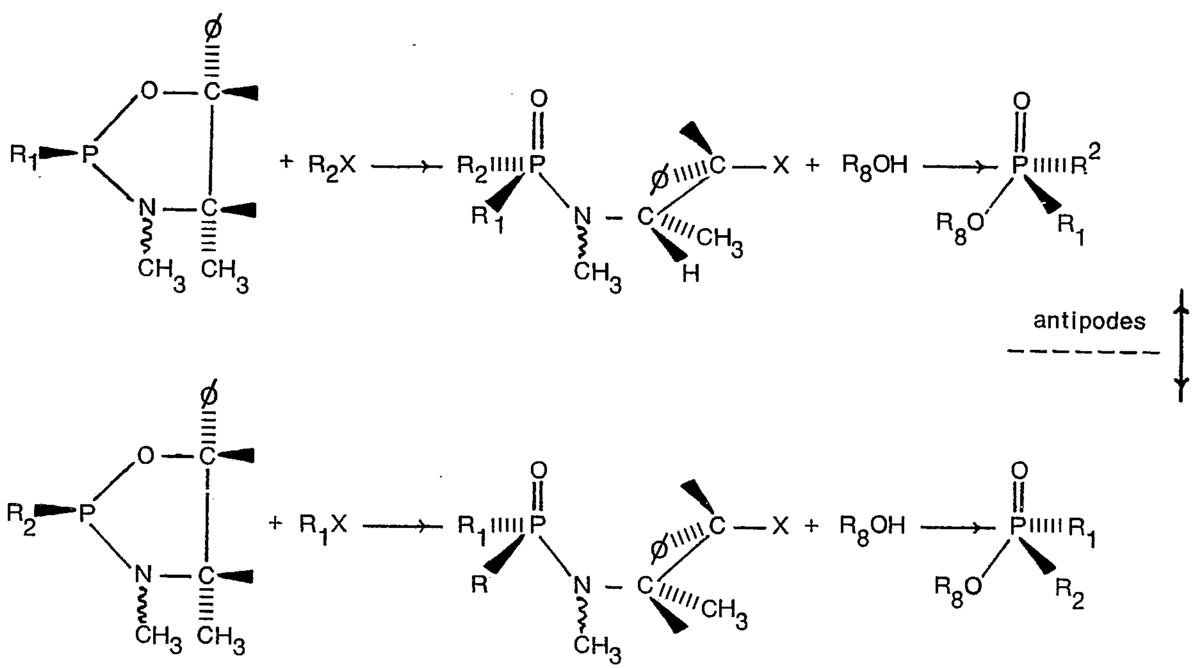

oxazaphospholidine à partir de la (+) éphédrine) :

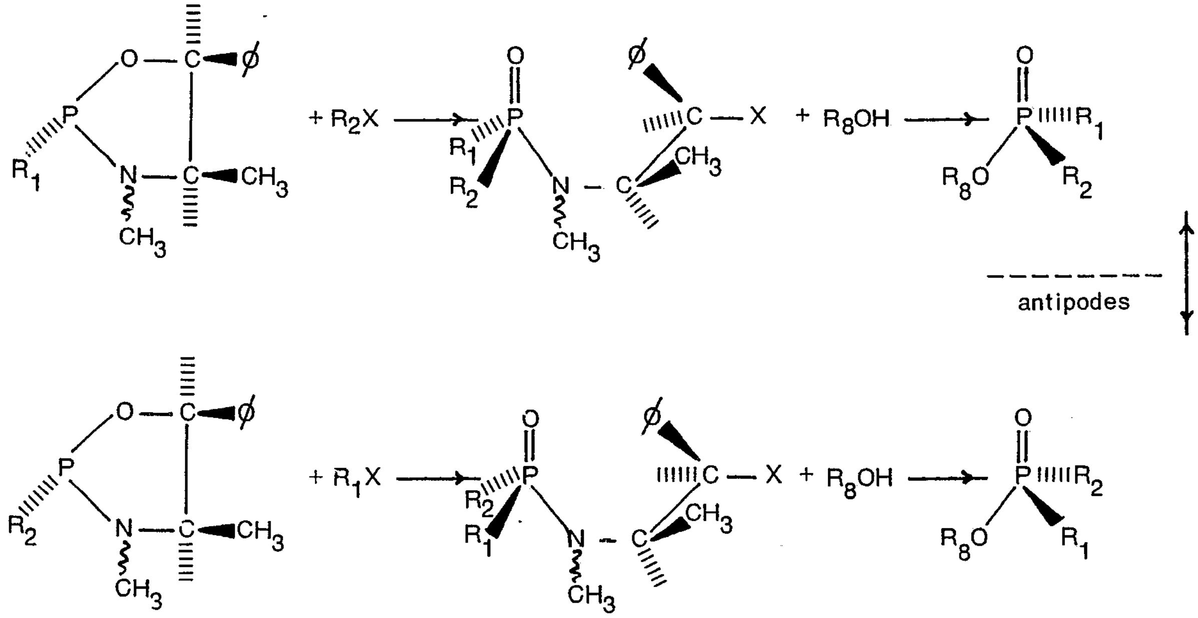


Bien que la préparation des oxazaphospholidines suivant la réaction (2) soit connue en soi, et que l'on sache déjà faire l'alcoolyse (3) des phosphinamides pour les transformer en phosphinates, la combinaison du procédé suivant l'invention (1) avec ces deux réactions, forme un ensemble à trois étapes, fort intéressant, pour l'obtention de phosphinates. Selon la nature des composés mis en ouevre, le rendement de chacune des étapes est d'environ 60 à 100%, et les durées sont d'environ 12 h pour la réaction (2), 1/4 d'heure pour la transformation (1) et de l'ordre de 1 h pour l'étape (3).

Les exemples non limitatifs, qui suivent, illustrent l'invention.

## Exemple 1

Etant donné l'importance des oxazaphospholidines pour la préparation des phosphinamides, suivant l'invention, on décrit, ci-après, le mode opératoire d'obtention d'une de ces phospholidines, notamment la (+) diméthyl-3,4 diphényl-2,5 oxazaphospholidine-1,3,2 (2R, 4S, 5R)

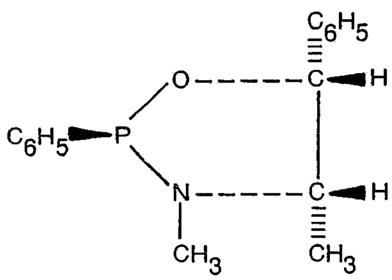

(F)

C'est le composé A de l'équation (1) donnée plus haut, dans lequel $R^1$ et $R^4$ sont des phényles, $R^3$ et $R^5$ sont des atomes d'hydrogène, tandis que $R^6$ et $R^7$ sont des méthyles. C'est un composé nouveau qui n'a pas encore été décrit dans la littérature technique.

La préparation est effectuée dans un ballon tricol de 1 litre, équipé d'un agitateur et muni de 2 buses servant à l'arrivée et à l'évacuation de l'azote de balayage. De la sorte l'amine, libérée au cours de la réaction, est entraînée hors du milieu et peut être dosée dans un flacon laveur.

On fait réagir 0,1 mole de (−) éphédrine avec 0,1 mole de bis(diéthyl-amino)phényl phosphine, pendant 12 h dans 500 ml de toluène, entre 100 et 110°C, sous un léger balayage d'azote.

Au bout de ce temps, le mélange réactionnel est transvasé dans une fiole d'évaporation, et le volume de solvant est amené à environ 250 ml. Par simple refroidissement, sous azote, le solution laisse précipiter le produit sus-indiqué. Après filtration et une nouvelle évaporation partielle de la liqueur mère, on recueille encore une fraction de ce composé.

Le rendement global en produit cristallisé est de 70%; le produit fond à 100°C et peut être cristallisé dans du toluène; il est conservé dans un récipient étanche, au réfrigérateur.

Le spectre RMN du produit brut de la réaction indique une très bonne pureté chimique et diastéréoisométrique. On trouve les paramètres suivants:

RMN$^1$H($C_6D_6$) doublet (3H) 0,5 ppm; doublet (3H) 2,4 ppm; multiplet (1H) 3,1 ppm; doublet (1H) 5,4 ppm; multiplet (10H) 7,7—8 ppm.

RMN ($C_6D_6$) $^{31}$P δ = +139,7 ppm

RMN (THF) $^{31}$P δ = +141,6 ppm

| Analyse: | C% | H% | N% | O% | P% |
|---|---|---|---|---|---|
| théorie | 70,84 | 6,69 | 5,16 | 5,90 | 11,42 |
| trouvé | 70,69 | 6,66 | 5,27 | 5,65 | 11,50 |

Pouvoir rotatoire $[\alpha]_D^{22} = +40° \pm 5°$; c = 2,3 ($C_6H_6$)

Exemple 2

Préparation de la (−) diméthyl-3,4 diphényl-2,5 oxo-2 oxazaphospholidine-1,3,2 (2R, 4S, 5R)

3 g de l'oxazaphospholidine (F) de l'exemple 1, en solution dans 50 ml de toluène, sont laissés sous agitation pendant 2 jours dans une fiole fourneau non bouchée. Au bout de ce temps, le toluène est évaporé et le résidu repris à l'acétone. On ajoute alors à chaud (50°C environ) de l'éther diisopropylique, jusqu'à la limite de solubilité. Le volume total de solvant ne doit pas être trop grand (20 ml environ). Par refroidissement l'oxyde attendu précipite. Le solvant de recristallisation est également un mélange acétone/éther diisopropylique.

Dans le cas d'une non précipitation du produit, il faut chromatographier le résidu obtenu par oxydation sur une colonne de silice Merck art. N° 7734 -éluant éther/acétone 8/2. Le produit sort avec un rf de 0,7, ce qui correspond en général à une dizaine de fractions de 100 ml.

Cette préparation a été effectuée pour vérifier la configuration du composé F; en effet, le dérivé oxo

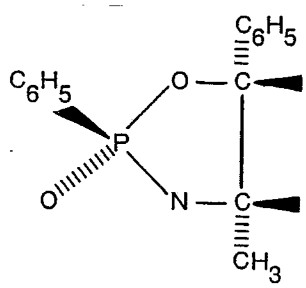

a été décrit par D.B. Cooper and al. Tet. Lett. 2697 (1974) et que sa configuration absolue est ainsi connue, son obtention, à partir du composé F, confirme la configuration proposée plus haut pour le composé F.

Le point de fusion trouvé est de 161°C. Oxydé, ce composé est obtenu également avec un rendement de plus de 90%, par chauffage à l'air pendant 24 heures.

La RMN$^1$N ($CDCl_3$) donne: doublet (3H) 0,91 ppm; doublet (3H) 2,62 ppm; multiplet (1H) 3,76 ppm; triplet (1H) 5.76 ppm; multiplet (10H) 7,2—8 ppm.

RMN$^{31}$P ($CDCl_3$) δ = 33 ppm

Exemple 3

Préparation du (+) N-méthyl N-(méthyl-1 iodo-2 phényl-2)-éthyl (1S, 2S) P-méthyl P-phényl phosphinamide (R).

Ce composé est obtenu par l'action de l'iodure de méthyle sur la phospholidine F décrite dans l'exemple 1.

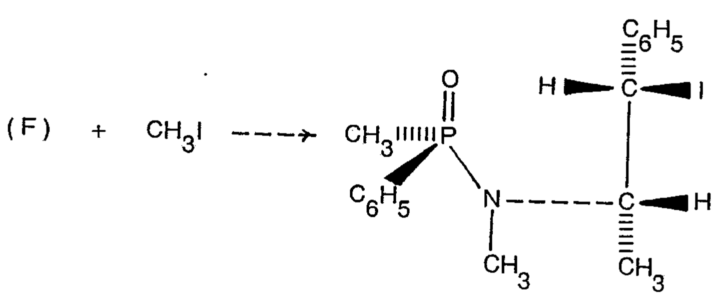

(G)

Le phosphinamide G correspond à la formule C dans laquelle $R^2$, $R^6$ et $R^7$ sont des méthyles, $R^1$ et $R^4$ des phényles, $R^3$ et $R^5$ des atomes d'hydrogène, l'halogéne, X étant de l'iode.

La préparation est effectuée selon le mode opératoire suivant: 0,1 mole d'oxazaphospholidine F à l'état solide est chauffé 10 mn à 95—100°C sous azote, dans un tube à filtration de large embouchure. On l'ajoute alors rapidement à un excès (0,3—0,4 mole) d'iodure de méthyle chauffé à ébullition sous azote également. On laisse la réaction, pratiquement instantanée, se poursuivre pendant 5 à 10 minutes. Par refroidissement le produit attendu cristallise, s'il n'y a pas trop d'iodure en excès. Néanmoins, ce dernier s'élimine facilement par évaporation. Le résidu, cristallisé ou non, est repris à l'acétone chaude et amené en limite de solubilité par de l'éther diisopropylique (volume total de solvant 200 ml). Par refroidissement le produit attendu précipite; rendement 60%.

Le point de fusion du produit obtenu est de 160—162°C.

RMN$^1$H ($CDCl_3$): doublet (3H) 1,1 ppm; doublet (3H) 1,95 ppm; doublet (3H) 2,45 ppm; multiplet (1H) 4,30 ppm; doublet (1H) 5,15 ppm; multiplet (10H) 7,1—8,20 ppm.

RMN$^{31}$P ($CDCl_3$) $\delta = +35{,}1$ ppm

Analyse élémentaire:

| | C% | H% | N% | O% | P% | I% |
|---|---|---|---|---|---|---|
| théorie: | 49,41 | 5,20 | 3,39 | 3,87 | 7,50 | 30,70 |
| trouvé: | 49,63 | 5,29 | 3,35 | 3,87 | 7,54 | 30,57 |

$[\alpha]_D^{21} = +162{,}5°$ c = 2,5 ($CH_3OH$)

Exemple 4

Préparation du (+) N-méthyl N-(méthyl-1 iodo-2 phényl-2)éthyl (1S, 2S) P-éthyl P-phényl phosphinamide (R).

C'est un analogue du phosphinamide G de l'exemple 3, dans lequel le méthyle sur l'atome de phosphore est remplacé par un éthyle. Ce composé est préparé à partir de la phospholidine F de l'exemple 1, par une opération similaire à celle de l'exemple 3, l'iodure de méthyle étant remplacée par de l'iodure d'éthyle. Le chauffage à reflux à 70°C a lieu pendant 8 minutes.

Le produit brut de la réaction, après évaporation de l'halogénure, est soumis à la chromatographie sur alumine avec de l'acétate d'éthyle comme éluant. Le phosphinamide attendu est recueilli après une dizaine de fractions de 100 ml. Le produit se présente sous la forme d'une huile épaisse. Sa configuration est la même, c'est-à-dire $(R)_p$, que celle du composé G, décrit dans l'exemple 3.

L'examen en RMN ($CDCl_3$) indique: doublet (3H) 1,1 ppm; triplet (3H) 1,25 ppm; triplet (3H) 2,40 ppm; multiplet (2H) 2,10 ppm; multiplet (1H) 4,20 ppm; doublet (1H) 5,25 ppm; multiplet (10H) 7,2—8,25 ppm.

| Micro analyse: | C% | H% | N% |
|---|---|---|---|
| calculé: | 50,60 | 5,43 | 3,28 |
| trouvé | 50,48 | 5,54 | 3,24 |

$[\alpha]_D^{21} = +116°$ c = 5 ($CHCl_3$).

Exemple 5

Préparation du (+) N-méthyl N-(méthyl-1 bromo-2 phényl-2)éthyl (1S, 2S) P-benzyl P-phényl phosphinamide (R).

Le produit visé est un phosphinamide analogue à celui de la formule C de la réaction (1); c'est un corps dans lequel $R^1$ est un phényle, $R^2$ un benzyle, $R^3$ un atome d'hydrogène, $R^4$ un phényle, X un atome de brome, $R^5$ un atome d'hydrogène, $R^6$ et $R^7$ étant des méthyles.

La préparation consiste à chauffer 0,1 mole d'oxazaphospholidine F de l'exemple 1 à 90°C sous azote, et l'ajouter rapidement à 8 moles de bromure de benzyle maintenu à la même température, également sous azote. On laisse réagir pendant 10 minutes.

Après refroidissement et évaporation sous vide de l'excès de bromure de benzyle, le résidu est repris avec de l'acétone chaude.

Au refroidissement, il se dépose des cristaux d'un mélange de diastéréoisomères du phosphinamide formé.

On constate, en effet, qu'avec cet halogénure, et dans les conditions opératoires sus-indiquées, une certaine épimérisation a lieu sur l'atome de phosphore.

Après filtration et évaporation de l'acétone, le résidu est chromatographié sur de l'alumine basique, à raison de 3 g pour 100 g d'$Al_2O_3$. Le phosphinamide sort après une dizaine de fractions de 50 ml et l'analyse en RMN révèle une pureté diastéréoisomérique correcte. Elle donne, pour le diastéréoisomère le plus abondant, de configuration $(R)_p$, les indications suivantes:

RMN ($CDCl_3$) doublet (3H) 1,05 ppm; doublet (3H) 2,50 ppm; multiplet (2H) 3,65 ppm; multiplet (1H) 4,30 ppm; doublet (1H) 5,05 ppm; multiplet (15H) 7—8,2 ppm.

Le mélange des diastéréoisomères, isolé par cristallisation, présente une température de fusion de 180—183°C.

RMN$^1$H ($CDCl_3$) doublet (3H) 0,65 ppm; doublet (3H) 1,05 ppm; triplet (3H) 2,55 ppm; multiplet (1H) 3,65 ppm; multiplet (1H) 4,30 ppm.

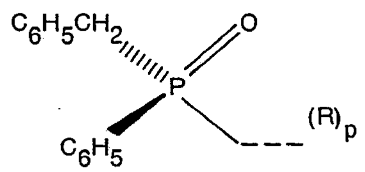

d'autre part doublet (1H) 5,05 ppm; doublet (1H) 4,85 ppm.

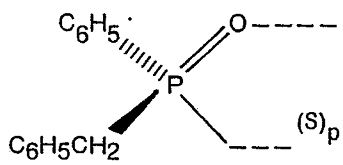

| Analyse: | C% | H% | Br% | N% | O% | P% |
|---|---|---|---|---|---|---|
| calculé: | 62,45 | 5,70 | 18,06 | 3,17 | 3,62 | 7,00 |
| trouvé: | 62,81 | 5,80 | 17,94 | 2,83 | 3,76 | 7,01 |

$[\alpha]_D^{21°} = 130°$ c = 1,2 ($CHCl_3$).

Exemple 6

On prépare un phosphinamide analogue à celui de l'exemple 5, mais portant un atome de chlore à la place du brome.

La préparation a lieu comme dans le cas précédent, mais avec du chlorure de benzyle, ce qui conduit à une pureté diastéréoisomérique de 80/20. La cristallisation dans l'acétone, du mélange des diastéréoisomères, élimine la majeure partie de l'épimère.

Après l'évaporation du solvant, le résidu obtenu est soumis à la chromatographie sur alumine basique (3 g pour 100 g d'alumine; éluant: acétate d'éthyle). Le diastéréoisomère sort après une dizaine de fractions de 50 ml.

Le diastéréoisomère principal, préparé, de configuration $(R)_p$, présente un point de fusion de 154—157°C.

La RMN ($CDCl_3$) donne: doublet (3H) 1,05 ppm; doublet (3H) 2,50 ppm; multiplet (2H) 3,60 ppm; multiplet (1H) 4,30 ppm; doublet (1H) 4,95 ppm; multiplet (15H) 7,20—8,00 ppm.

$[\alpha]_D^{20°} = +130°$ c = 3 $CHCl_3$ RMN$^{31}$P ($CDCl_3$) $\delta = +36,34$ ppm

| Analyse: | C% | H% | Cl% | N% | O% | P% |
|---|---|---|---|---|---|---|
| calculé: | 69,43 | 6,33 | 8,91 | 3,52 | 4,02 | 7,78 |
| trouvé: | 68,55 | 6,43 | 8,69 | 3,43 | 4,54 | 7,17 |

Quant au mélange de diastéréoisomères, isolé par cristallisation, $(R)_p + (S)_p$, il présente un point de fusion de 175°C.

Sa RMN ($CDCl_3$) indique: doublet (3H) 0,55 ppm; doublet (3H) 1,00 ppm; triplet (2H) 2,50 ppm; multiplet (2H) 3,50 ppm; multiplet (1H) 4,20 ppm; doublet (1H) 4,80 ppm; doublet (1H) 4,95 ppm; multiplet (15H) 7,00—8,20 ppm.

$[\alpha]_D = +123°$ c = 1,2 $CHCl_3$

RMN$^{31}$P ($CDCl_3$) $\delta = +36,47$ et $+36,21$ ppm.

Exemple 7

Application du phosphinamide de l'exemple 3 (G) à la préparation de méthyl phényl phosphinate de méthyle, de configuration R (+).

290 mg de phosphinamide sont dissous dans une solution méthanolique d'acide chlorhydrique 1,76 N. Au bout d'une heure, on ajoute 10 ml d'une solution méthanolique d'ammoniaque, 2,8 N pour neutraliser l'acide.

Après l'évaporation du solvant et reprise du résidu par 10 ml de chlorure de méthylène, on filtre pour éliminer les sels minéraux. Une nouvelle évaporation du solvant donne un résidu qui est soumis à la chromatographie sur silice avec de l'acétone comme éluant (plaque 20 × 20). Après extraction au méthanol de la bande comprise entre les rf 0,55 et 0,65, on récupère le phosphinate formé. On trouve $[\alpha]_D = +52°$ c = 3 (benzène, ce qui représente 93% de pureté optique).

L'examen en RMN a confirmé la structure de ce phosphinate connue par la littérature antérieure (M. J. P. Harguer, Journ. Chem. Soc. Perkin I, 1294 (1979).

Exemple 8

Application de phosphinamide de l'exemple 4 à la préparation de l'éthyl phényl phosphinate de méthyle, configuration R (+).

500 mg de phosphinamide sont dissous dans 50 ml d'une solution méthanolique d'acide méthane sulfonique 0,15 M, et la solution est laissée au repos pendant 1/2 heure, à 60°C. Au bout de ce temps, on neutralise avec 100 ml d'une solution ammoniacale 4M. Après évaporation du solvant, le résidu est repris avec 30 ml de chlorure de méthylène, et les sels minéraux insolubles sont séparés par filtration. Après une nouvelle évaporation, le résidu est chromatographié sur silice avec de l'acétone comme éluant.

Le phosphinate formé est récupéré, après élution d'une dizaine de fractions de 50 ml environ.

Ce produit, connu dans l'art, est huileux et présente un $[\alpha]_D = +22{,}7°$, c = 7 (méthanol); pureté optique = 47%. La RMN confirme la structure indiquée plus haut.

Exemple 9

Application du phosphinamide de l'exemple 6 à la préparation de benzylphénylphosphinate de méthyle R(−). 2,2 g de phosphinamide sont dissous dans 50 ml d'une solution méthanolique d'acide méthane sulfonique 0,1 M, et la solution est maintenue à 55°C, pendant 2h.

Après neutralisation avec une solution méthanolique d'ammoniaque 1M, on chasse le solvant. Repris par du chlorure de méthylène, le résidu est filtré et le solvant à nouveau évaporé.

Une filtration sur 50 g d'alumine pour 2 g conduit à l'obtention du phosphinate après quelques fractions, l'éluant étant de l'acétate d'éthyle.

Le point de fusion du racémique est de 96°C. Le phosphinate optiquement actif présente un $[\alpha]_D = -3{,}2°$ pour c = 6 (méthanol), à 77% de pureté optique.

La RMN ($CDCl_3$) donne doublet (2H) 3,3 ppm; doublet (3H) 3,6 ppm; multiplet (H) 7—7,8 ppm.

On est là en présence d'un phosphinate nouveau, obtenu suivant l'invention, qui n'était pas connu jusqu'à présent. A partir des phosphinates, issus des phosphinamides obtenus, suivant l'invention, on a préparé, par la méthode de Mislow et col. (Journ. Am. Chem. Soc., 90, 4842 (1968), toute une série d'oxydes de phosphines, notamment:

oxyde de benzyl méthyl phényl phosphine R(+)
oxyde de benzyl méthyl phényl phosphine S(−)
oxyde d'éthyl méthyl phényl phosphine R(+)
oxyde d'éthyl méthyl phényl phosphine S(−)
oxyde de méthyl o-méthoxy-phényl phényl phosphine R(+)
oxyde de méthyl phényl ß-naphtyl phosphine R(+).

Il est à noter que l'oxazaphospholidine (F), préparée selon l'exemple 1, tous les phosphinamides des exemples 3 à 7, ainsi que le benzylphénylphosphinate de méthyle de l'exemple 9, et en particulier leurs isomères optiquement actifs, sont des produits chimiques nouveaux.

Exemple 10

Préparation du (+) N-méthyl N-(méthyl-1 iodo-2 phényl-2)éthyl (1S, 2S) phosphinamide R, en solution dans le toluène.

Ce composé est obtenu par action de l'iodure de méthyle sur l'oxazaphospholidine F de l'exemple 1.

Dans un ballon tricol de 1 litre, on dissous 0,1 mole d'oxazaphospholidine F dans 500 ml de toluène; on ajoute sous agitation 0,5 mole d'iodure de méthyle. Le mélange est chauffé sous azote à 80°C, pendant 1 heure. Après repos, une huile jaune clair se dépose; on évapore le toluène, et l'iodure de méthyle en excès. L'huile, obtenue par évaporation du toluène, est soumise à la chromatographie sur alumine basique, avec de l'acétate d'éthyle comme éluant. Le phosphinamide est recueilli après une dizaine de fractions de 150 ml. Le produit pur se présente sous la forme cristallisée, dont les caractéristiques RMN sont identiques à celles du produit de l'exemple 3, mais le rendement en produit cristallisé n'est que d'environ 7% contre 60% dans l'exemple 3 où la préparation était effectuée sans solvant.

Cet exemple montre donc que le chauffage prolongé à 80°C, à la lumière, conduit à un mauvais

rendement en phosphinamide. Le rendement dépasse 60%, si l'on opère dans l'obscurité, sous l'azote, sans humidité, pendant 12 minutes seulement.

Exemple 11

Préparation de P-méthyl P-phényl N-méthyl N(méthyl-1 bromo-2 phényl-2)-éthyl phosphinamide. La préparation de ce phosphinamide diffère de celle de l'exemple 3, car le bromure de méthyle étant gazeux, il n'est pas possible de la faire réagir facilement avec l'oxazaphospholidine solide.

On utilise le mode opératoire suivant.

A 500 ml d'une solution toluénique d'oxazaphospholidine F de l'exemple 1, on ajoute du bromure de méthyle gazeux, en le faisant barboter, en excès, dans la solution maintenue à 80°C, pendant une demi-heure. On élimine ensuite le solvant et l'excès de bromure de méthyle. L'huile, obtenue par évaporation du toluène, est soumise à la chromatographie sur alumine avec de l'acétate d'éthyle comme éluant. Le rendement de la réaction est inférieur à 5%, ce qui confirme la conclusion de l'exemple 10.

Le phosphinamide est recueilli après une dizaine de fractions de 100 ml de solvant. Il se présente sous la forme d'une huile dont l'examen en RMN ($CDCl_3$) indique:

doublet (3H) 1,1 ppm; doublet (3H) 1,9 ppm; doublet (3H) 2,4 ppm; multiplet (1H) 4,5 ppm; doublet (1H) 5 ppm; doublet (10H) 7,2—8 ppm.

Exemple 12

Préparation de la (−) diméthyl-3,4 diphényl-2,5 oxazaphospholidine-1,3,2 (2S, 4R, 5S), c'est-à-dire d'un composé antipode de celui (F) de l'exemple 1.

Pour cela les opérations de l'exemple 1 sont répétées exactement, mais en partant de la (+) éphédrine au lieu de la (−).

Le produit, ainsi obtenu, présente une très bonne pureté chimique et diastéréoisomérique. Le point de fusion, 100°C (recristallisé dans du toluène) et les caractéristiques RMN sont les mêmes que celles du produit F, indiquées dans l'exemple 1, tandis que le pourvoir rotatoire est $[\alpha]_D^{20°} = -40° \pm 5$ ($c = 2{,}5$ $C_6H_6$) contre $+40° \pm 5$ pour le produit F. On est là en présence d'une (−) oxazaphospholidine nouvelle, de configuration:

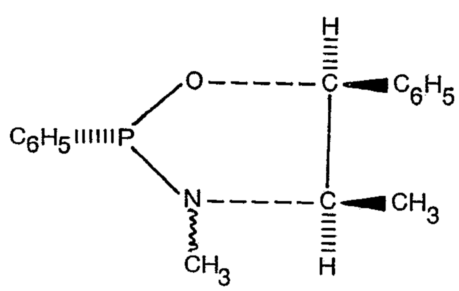

Exemple 13

Préparation du (+) N-méthyl N-(méthyl-1 iodo-2 phényl-2)-éthyl (1S, 2S) P-méthyl P-phényl phosphinamide (R) au sein d'un solvant, à froid.

Les réactifs de départ sont ici les mêmes que dans l'exemple 3, mais ils sont dissous dans un mélange en volumes égaux de benzène et de cyclohexane. Ainsi dissout-on 0,01 mole d'oxazaphospholidine (F de l'exemple 1) dans 80 ml de ce mélange contenu dans un erlenmeyer de 250 ml; puis on ajoute 0,035 mole de $CH_3I$ préalablement filtré sur de l'alumine basique. Le récipient est purgé à l'azote et avec cette atmosphère inerte il est bouché hermétiquement puis laisse au repos, à l'abri de la lumière, pendant 72 heures, à la température ambiante. Au bout de ce temps, une huile partiellement cristallisée s'est déposée au fond du récipient.

Après l'évaporation du solvant et l'analyse RMN du produit brut restant, on trouve un rendement de 84% en le phosphinamide préparé.

La recristallisation dans l'acétone fournit le produit pur, identique à l'analyse au produit G de l'exemple 3.

La comparison avec les exemples 10 et 11 montre l'amélioration considérable, obtenue dans l'obscurité, sans humidité à froid.

Exemple 14

Préparation du (−) N-méthyl N-(méthyl-1 iodo-2 phényl-2)-éthyl (1R, 2R)P-méthyl P-phényl phosphinamide (S).

Ce composé est l'antipode du phosphinamide (R) désigné par G dans l'exemple 3. Il est préparé à partir de la (−) oxazaphospholidine de l'exemple 12, elle-même obtenue à partir de la (+) éphédrine.

La préparation est effectuée de la même façon que dans l'exemple 13, au sein du même solvant aromatique + cyclane; le même rendement est obtenu, et le produit présente les mêmes caractéristiques que le G décrit plus haut, sauf le pouvoir rotatoire qui est $[\alpha]_D^{21} = -162,5°$ c = 2,5 $CH_3OH$ au lieu de +162,5°.

Exemple 15

Préparation du (+) N-méthyl N-(méthyl-1 bromo-2 phényl-2)-éthyl (1S, 2S) P-benzyl P-phényl phosphinamide (R).

Il s'agit du même produit qu'à l'exemple 5, mais la préparation a lieu en milieu homogène, à froid, les réactifs étant dissous dans un mélange 1:1 de benzène avec du cyclohexane.

On opère sur 0,01 mole d'oxazaphospholidine (F) et 0,03 mole de $C_6H_5CH_2Br$ purifié, dans 80 ml de mélange solvant. Après 7 jours à la température ordinaire, sous une atmosphère d'azote, à l'abri de la lumière, on recueille 3,5 g de cristaux de diastéréoisomères (rendement 60,3% sur l'oxazaphospholidine). La liqueur-mère contient principalement le diastéréoisomère le plus abondant, de configuration $(R)_p$ aux caractéristiques indiquées dans l'exemple 5.

Exemple 16

Application de phosphinamide G, de l'exemple 3, à la préparation du phosphinate de méthyle correspondant. C'est une préparation analogue à celle de l'exemple 7, mais effectuée en présence d'un échangeur d'ions comme catalyseur.

A 0,413 g de phosphinamide (0,001 mole), en solution dans 50 ml de méthanol, en ajoute 1 g de résine échangeuse d'ions, acide, connue sous la dénomination commerciale de DOWEX 50 W, préalablement lavée avec de l'HCl aqueux à 10%, puis à l'eau, ensuite au méthanol et séchée.

Après 1 heure d'agitation à la température ambiante, le mélange est filtré et le méthanol évaporé. Le résidu est chromatographié sur silice, avec de l'acétone comme éluant.

Le phosphinate obtenu présente un $[\alpha]_D^{20} = +47°$ (c = 2 $C_6H_6$)) sa pureté optique est de 82%. Le nouveau catalyseur employé, l'échangeur d'ions, présente l'avantage d'être séparable par simple filtration.

Exemple 17

La transformation en phosphinate de méthyle, de façon identique à celle de l'exemple 16, est effectuée sur le phosphinamide (R) obtenu suivant l'exemple 13.

On obtient alors du méthyl phényl phosphinate de méthyle de configuration S(−) au lieu de la configuration R(+) des exemples 7 et 13.

Ce composé présente un $[\alpha]_D^{20} = -45°$ (c = 2 $C_6H_6$), qui correspond à une pureté optique de 78%.

**Revendications**

1. Procédé pour la préparation d'un phosphinamide qui consiste à faire réagir une oxaza-1,3,2 phospholidine avec un halogénure organique $R^2X$ où X est chlore, brome ou iode, $R^2$ étant un alkyle, arylalkyle, aryl, cycloalkyle ou une chaîne saturée portant des groupes fonctionnels, notamment ester, éther ou cétone, caractérisé en ce que la réaction a lieu à l'abri de l'air et en l'absence de l'humidité.

2. Procédé suivant la revendication 1, caractérisé en ce que la préparation est réalisée suivant la réaction

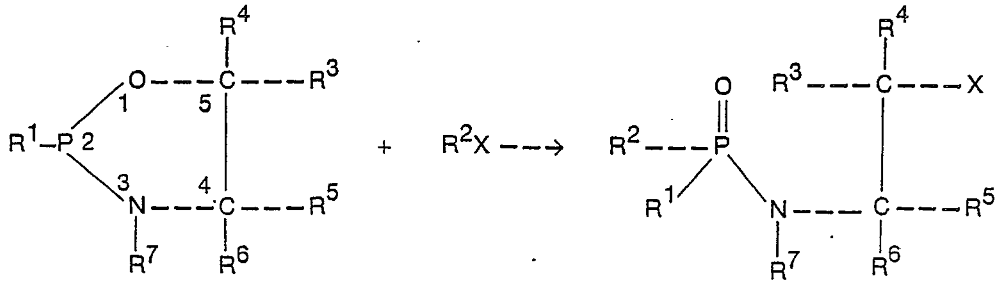

(1)

(A) (B) (C)

où les symboles $R^1$ et $R^3$ à $R^7$ désignet des atomes d'hydrogène ou des groupements hydrocarbonés, semblables ou différents, aliphatiques, cycloaliphatiques ou/et aryliques.

3. Procédé suivant la revendication 2, caractérisé en ce que les alkyles sont en $C_1$ à $C_{18}$ et, plus particulièrement en $C_1$ à $C_4$.

4. Procédé suivant la revendication 2 ou 3, caractérisé en ce que certains des symboles $R^1$ et $R^3$ à $R^7$ représentent des phényles, phényles substitués, benzyles, naphtyles, cyclopentyles ou/et cyclohexyles.

5. Procédé suivant une des revendications 1 à 4, caractérisé en ce que l'oxazaphospholidine, prise à l'état solide, est chauffée avec un excès d'halogénure organique.

6. Procédé suivant une des revendications précédentes, caractérisé en ce que la préparation a lieu à une température de 10° à 100°C, de préférence, entre 10° et 40°C.

7. Procédé suivant une des revendications 1 à 4 et 6, dans lequel l'oxazaphospholidine et l'halogénure organique sont dissous dans un solvant, caractérisé en ce que la préparation est réalisée entre 10° et 40°C, notamment à la température ambiante.

8. Procédé suivant la revendication 7, caractérisé en ce que le solvant est un mélange d'hydrocarbure aromatique avec un cyclane.

9. Procédé suivant une des revendications précédentes, pour la préparation de phosphinamides optiquement actifs, caractérisé en ce que, selon la configuration désirée pour le stéréoisomère à obtenir, on utilise une oxazaphospholidine issue d'un amino-alcool optiquement actif (+) ou (−).

10. Procédé suivant la revendication 9, caractérisé en ce que des stéréoisomères antipodes de configuration absolue, connue, sont préparés à partir de l'un ou l'autre des dits types d'oxazaphospholidines, en utilisant un halogénure organique $R^2X$ avec une oxazaphospholidine (A) portant un groupe $R^1$ sur le phosphore, et — au contraire — un halogénure $R^1X$ avec une oxazaphospholidine dont le P porte un groupe $R^2$, étant entendu que les deux substituants $R^1$ et $R^2$ sont différents l'un de l'autre.

11. Procédé suivant une des revendications 1 à 10, caractérisé en ce que la réaction a lieu à l'abri de la lumière.

12. Produit chimique nouveau, constitué par un phosphinamide de structure:

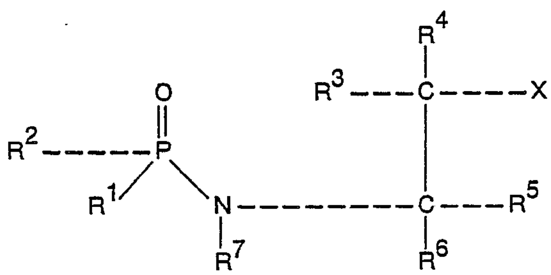

où les symboles $R^1$ et $R^3$ à $R^7$ repésentent des atomes d'hydrogène ou/et des groupes hydrocarbonés semblables ou différents, X étant un halogène, caractérisé en ce que les groupes $R^1$, $R^3$ et $R^6$ sont choisis parmi les alkyles en $C_1$ à $C_4$, le phényle, phényles substitués et le benzyle, $R^4$ et $R^5$ étant des atomes d'hydrogène et $R^7$, ainsi que $R^2$ des alkyles en $C_1$ à $C_4$.

13. Phosphinamide suivant la revendication 12, caractérisé en ce que $R^1$ et $R^4$ sont des phényles, $R^2$, $R^6$ et $R^7$ sont des méthyles, tandis que X est un atome d'iode.

14. Phosphinamide suivant la revendication 12, caractérisé en ce que $R^1$ et $R^4$ sont des phényles, $R^2$, $R^6$ et $R^7$ sont des méthyles, X étant un atome de brome.

15. Phosphinamide suivant la revendication 12, caractérisé en ce que $R^1$ et $R^4$ sont des phényles, $R^2$ un éthyle, $R^6$ et $R^7$ des méthyles, et X un atome d'iode.

16. Phosphinamide suivant la revendication 12, caractérisé en ce que $R^1$ et $R^4$ sont des phényles, $R^2$ un benzyle, $R^6$ et $R^7$ des méthyles et X un atome de brome.

17. Phosphinamide suivant la revendication 12, caractérisé en ce que $R^1$ et $R^4$ sont des phényles, $R^2$ un benzyle, $R^6$ et $R^7$ des méthyles, et X un atome de chlore.

18. Phosphinamides suivant les revendications 12 à 17 caractérisés en ce qu'ils sont optiquement actifs, de configuration connue (R) ou (S).

19. Application du phosphinamide suivant une des revendications 12 à 18 à la préparation d'un phosphinate correspondant, en particulier d'un phosphinate optiquement actif, de configuration absolue, connue, par l'alcoolyse du phosphinamide.

20. Application suivant la revendication 19, caractérisée en ce que l'alcoolyse est catalysée par une résine échangeuse d'ions.

21. Application suivant la revendication 19 ou 20, caractérisée en ce qu'elle consiste en la préparation du nouveau produit chimique qu'est le benzyl phényl phosphinate de méthyle optiquement actif.

**Patentansprüche**

1. Verfahren zur Herstellung eines Phosphinamids, durch Reaktion eines Oxaza-1,3,2-phospholidins mit einem organischen Halogenid $R^2X$, worin X Chlor, Brom oder Jod ist, und $R^2$ ein Alkyl, Arylalkyl, Aryl, Cycloalkyl oder eine gesättigte Kette, die funktionelle Gruppen, insbesondere Ester, Ether oder Keton, trägt, ist, dadurch gekennzeichnet, dass die Reaktion unter Ausschluss von Luft und in Abwesenheit von Feuchtigkeit durchgeführt wird.

2. Verfahren nach Anspruch 1, dadurch gekennzeichnet, dass die Herstellung nach der Reaktion

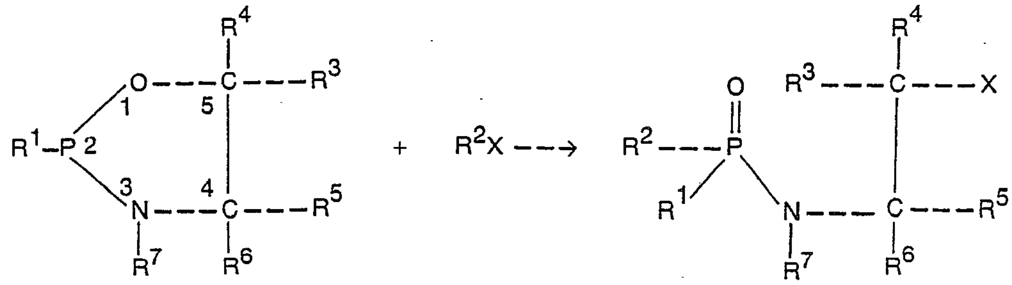

(1)

(A) (B) (C)

erfolgt, worin die Symbole $R^1$ und $R^3$ bis $R^7$ Wasserstoffatome oder gleiche oder verschiedene aliphatische, cycloaliphatische und/oder arylische Kohlenwasserstoffgruppe darstellen.

3. Verfahren nach Anspruch 2, dadurch gekennzeichnet, dass die Alkyle $C_1$ bis $C_{18}$ und insbesondere $C_1$ bis $C_4$ aufweisen.

4. Verfahren nach Anspruch 2 oder 3, dadurch gekennzeichnet, dass bestimmte der Symbole $R^1$ und $R^3$ bis $R^7$ Phenyle, substituierte Phenyle, Benzyle, Naphthyle, Cyclopentyle und/oder Cyclohexyle darstellen.

5. Verfahren nach einem der Ansprüche 1 bis 4, dadurch gekennzeichnet, dass das Oxazaphospholidin, eingesetzt im festen Zustand, mit einem Überschuss des organischen Halogenids erhitzt wird.

6. Verfahren nach einem der vorhergehenden Ansprüche, dadurch gekennzeichnet, dass die Herstellung bei einer Temperatur von 10 bis 100°C, vorzugsweise zwischen 10 und 40°C erfolgt.

7. Verfahren nach einem der Ansprüche 1 bis 4 und 6, bei dem das Oxazaphospholidin und das organische Halogenid in einem Lösungsmittel gelöst werden, dadurch gekennzeichnet, dass die Herstellung zwischen 10 und 40°C, insbesondere bei Raumtemperatur durchgeführt wird.

8. Verfahren nach Anspruch 7, dadurch gekennzeichnet, dass das Lösungsmittel ein Gemisch von aromatischem Kohlenwasserstoff mit einem Cyclan ist.

9. Verfahren nach einem der vorhergehenden Ansprüche zur Herstellung von optisch aktiven Phosphinamiden, dadurch gekennzeichnet, dass man je nach der für das herzustellende Stereoisomere gewünschten Konfiguration ein Oxazaphospholidin verwendet, das von einem optisch aktiven (+)- oder (−)-Aminoalkohol stammt.

10. Verfahren nach Anspruch 9, dadurch gekennzeichnet, dass stereoisomere Antipoden mit bekannter absoluter Konfiguration hergestellt werden, ausgehend von dem einem oder dem anderen der genannten Oxazaphospholidin-Typen, unter Verwendung eines organischen Halogenids $R^2X$ mit einem Oxazaphospholidin (A), das eine Gruppe $R^1$ an dem Phosphor trägt und — im Gegensatz hierzu — eines Halogenids $R^1X$ mit einem Oxazaphospholidin, dessen P eine Gruppe $R^2$ trägt, wobei selbstverständlich die beiden Substituenten $R^1$ und $R^2$ voneinander verschieden sind.

11. Verfahren nach einem der Ansprüche 1 bis 10, dadurch gekennzeichnet, dass die Reaktion unter Ausschluss von Licht durchgeführt wird.

12. Neues chemisches Produkt, bestehend aus einem Phosphinamid der Struktur

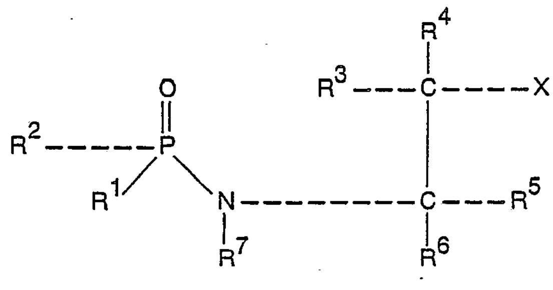

worin die Symbole $R^1$ und $R^3$ bis $R^7$ Wasserstoffatome und/oder gleiche oder verschiedene Kohlenwasserstoffgruppen darstellen, X ein Halogen bedeutet, dadurch gekennzeichnet, dass die Gruppen $R^1$, $R^3$ und $R^6$ ausgewählt sind unter $C_1$ bis $C_4$-Alkyl, Phenyl, substituiertem Phenyl und Benzyl, $R^4$ und $R^5$ Wasserstoffatome sind und $R^7$ sowie $R^2$ $C_1$ bis $C_4$-Alkyl sind.

13. Phosphinamid nach Anspruch 12, dadurch gekennzeichnet, dass $R^1$ und $R^4$ Phenyl sind, $R^2$, $R^6$ und $R^7$ Methyl sind, während X ein Jodatom ist.

14. Phosphinamid nach Anspruch 12, dadurch gekennzeichnet, dass $R^1$ und $R^4$ Phenyl sind, $R^2$, $R^6$ und $R^7$ Methyl sind und X ein Bromatom ist.

15. Phosphinamid nach Anspruch 12, dadurch gekennzeichnet, dass $R^1$ und $R^4$ Phenyl sind, $R^2$ ein Äthyl ist, $R^6$ und $R^7$ Methyl sind und X ein Jodatom ist.

16. Phosphinamid nach Anspruch 12, dadurch gekennzeichnet, dass $R^1$ und $R^4$ Phenyl sind, $R^2$ ein Benzyl ist, $R^6$ und $R^7$ Methyl sind und X ein Bromatom ist.

17. Phosphinamid nach Anspruch 12, dadurch gekennzeichnet, dass $R^1$ und $R^4$ Phenyl sind, $R^2$ ein Benzyl ist, $R^6$ und $R^7$ Methyl sind und X ein Chloratom ist.

18. Phosphinamide nach Anspruch 12 bis 17, dadurch gekennzeichnet, dass sie optisch aktiv mit bekannter (R) oder (S)-Konfiguration sind.

19. Verwendung des Phosphinamids nach einem der Ansprüche 12 bis 18 zur Herstellung eines entsprechenden Phosphinats, insbesondere eines optisch aktiven Phosphinats mit bekannter absoluter Konfiguration durch Alkoholyse des Phosphinamids.

20. Verwendung nach Anspruch 19, dadurch gekennzeichnet, dass die Alkoholyse durch ein Ionenaustauscherharz katalysiert wird.

21. Verwendung nach Anspruch 19 oder 20, dadurch gekennzeichnet, dass sie in der Herstellung eines neuen chemischen Produkts besteht, bei dem es sich um optisch aktives Methyl-benzylphenylphosphinat handelt.

**Claims**

1. Process for the preparation of a phosphinamide, which consists in reacting a 1,3,2-oxazaphospholidine with an organic halide, $R^2X$, where X is chlorine, bromine or iodine, $R^2$ being an alkyl, arylalkyl, aryl, cycloalkyl or a saturated chain carrying functional groups, particularly ester, ether or ketone, characterised in that the reaction takes place with the exclusion of air and in the absence of moisture.

2. Process according to claim 1, characterised in that the preparation is carried out according to the reaction:

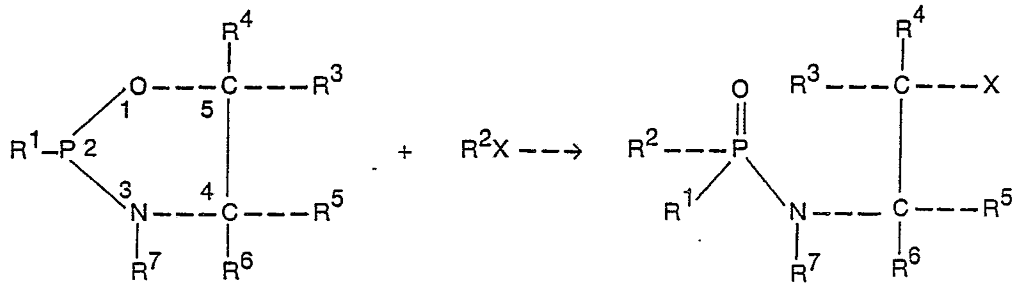

(1)

(A) (B) (C)

where the symbols $R^1$ and $R^3$ to $R^7$ designate hydrogen atoms or the same or different aliphatic, cycloaliphatic and/or hydrocarbon groups.

3. Process according to claim 2, characterised in that the alkyls are $C_1$ to $C_{18}$ and more particularly $C_1$ to $C_4$.

4. Process according to claim 2 or 3, characterised in that some of the symbols $R^1$ and $R^3$ to $R^7$ represent phenyls, substituted phenyls, benzyls, naphthyls, cyclopentyls and/or cyclohexyls.

5. Process according to any of claims 1 to 4, characterised in that the oxazaphospholidine, in the solid state, is heated with an excess of organic halide.

6. Process according to any of the preceding claims, characterised in that the preparation takes place at a temperature of 10° to 100°C, preferably between 10° and 40°C.

7. Process according to any of claims 1 to 4 and 6, in which the oxazaphospholidine and the organic halide are dissolved in a solvent, characterised in that the preparation is carried out between 10° and 40°C, particularly at ambient temperature.

8. Process according to claim 7, characterised in that the solvent is a mixture of an aromatic hydrocarbon with a cyclane.

9. Process according to any of the preceding claims, for the preparation of optically-active phosphinamides, characterised in that, depending upon the configuration desired for the stereoisomer to be obtained, an oxazaphospholidine obtained from a (+) or (−) optically-active amino alcohol is used.

10. Process according to claim 9, characterised in that known antipodian stereoisomers of absolute configuration are prepared from one or other of the stated types of oxazaphospholidines, utilising an organic halide, $R^2X$, with an oxazaphospholidine (A) carrying a group, $R^1$, on the phosphorus and — by contrast — a halide, $R^1X$, with an oxazaphospholidine, the P of which carries a group, $R^2$, the two substituents $R^1$ and $R^2$ being different from one another.

11. Process according to any of claims 1 to 10, characterised in that the reaction takes place in the absence of light.

12. New chemical product, constituted by a phosphinamide of the structure:

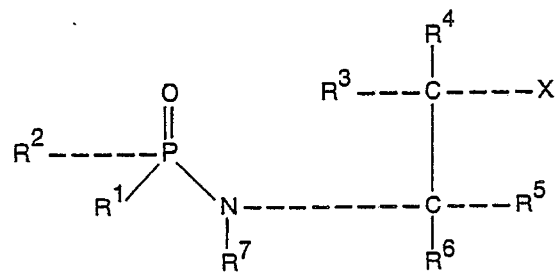

where the symbols $R^1$ and $R^3$ to $R^7$ represent hydrogen atoms and/or the same or different hydrocarbon groups, X being a halogen, characterized in that the groups $R^1$, $R^3$ and $R^6$ are selected from $C_1$ to $C_4$ alkyls, phenyl, substituted phenyls and benzyl, $R^4$ and $R^5$ are hydrogen atoms and $R^7$, as well as $R^2$, are $C_1$ to $C_4$ alkyls.

13. Phosphinamide according to claim 12, characterised in that $R^1$ and $R^4$ are phenyls, $R^2$, $R^6$ and $R^7$ are methyls and X is an iodine atom.

14. Phosphinamide according to claim 12, characterised in that $R^1$ and $R^4$ are phenyls, $R^2$, $R^6$ and $R^7$ are methyls and X is a bromine atom.

15. Phosphinamide according to claim 12, characterised in that $R^1$ and $R^4$ are phenyls, $R^2$ is an ethyl, $R^6$ and $R^7$ are methyls and X is an iodine atom.

16. Phosphinamide according to claim 12, characterised in that $R^1$ and $R^4$ are phenyls, $R^2$ is a benzyl, , $R^6$ and $R^7$ are methyls and X is a bromine atom.

17. Phosphinamide according to claim 12, characterised in that $R^1$ and $R^4$ are phenyls, $R^2$ is a benzyl, $R^6$ and $R^7$ are methyls and X is a chlorine atom.

18. Phosphinamides according to claims 12 to 17, characterised in that they are optically active and of known (D) or (L) configuration.

19. Use of the phosphinamide according to any of claims 12 to 18 in the preparation of a corresponding phosphinate, in particular an optically-active phosphinate of known absolute configuration, by alcoholysis of the phosphinamide.

20. Use according to claim 19, characterised in that the alcoholysis is catalysed by an ion exchange resin.

21. Use according to claim 19 or 20, characterised in that it consists of the preparation of the new chemical product which is the optically-active benzyl-phenyl-phosphinate of methyl.